(19) Europäisches Patentamt

European Patent Office

Office européen des brevets

(11) EP 0 250 626 B2

(12) **NEUE EUROPÄISCHE PATENTSCHRIFT**

(45) Veröffentlichungstag und Bekanntmachung des Hinweises auf die Entscheidung über den Einspruch:
**11.09.1996 Patentblatt 1996/37**

(45) Hinweis auf die Patenterteilung:
**27.06.1990 Patentblatt 1990/26**

(21) Anmeldenummer: **86108876.3**

(22) Anmeldetag: **30.06.1986**

(51) Int. Cl.$^6$: **C02F 1/52**, C02F 1/58

(54) **Verfahren zur Abtrennung von Sulfationen aus Abwässern**

Process for the separation of sulfate ions from waste water

Procédé de séparation des ions sulfate d'eau résiduaire

(84) Benannte Vertragsstaaten:
**AT BE DE FR GB IT LU NL SE**

(43) Veröffentlichungstag der Anmeldung:
**07.01.1988 Patentblatt 1988/01**

(73) Patentinhaber: **Walhalla-Kalk Entwicklungs- und Vertriebsgesellschaft mbH**
**D-93055 Regensburg (DE)**

(72) Erfinder:
• **Kästle, Hans, Dipl.-Ing. (FH)**
**D-7972 Isny/Allgäu (DE)**
• **Schuster, Georg, Dipl.-Ing. (FH)**
**D-8409 Tegernheim (DE)**

(74) Vertreter: **Beetz & Partner**
**Patentanwälte**
**Steinsdorfstrasse 10**
**80538 München (DE)**

(56) Entgegenhaltungen:
**DE-A- 2 517 665**

• **JOURNAL OF WATER POLLUTION CONTROL FEDERATION, Band 48, Nr. 12, Dezember 1976, Seiten 2804-2808, Washington, D.C., US; J.R. CHRISTOE: "Removal of sulfate from industrial wastewaters"**
• **JOURNAL OF WATER POLLUTION CONTROL FEDERATION, Band 50, Nr. 7, Juli 1978, Seiten 1821-1826, Washington, D.C., US; D.J. SCHAEZLER: "Precipitation of calcium aluminates and sulfoaluminates from water"**
• **H.-G.Keller, M.Mehlmann : Untersuchung zur Senkung der Sulfationenkonzentration in Abwässern durch Zugabe von Kalkhydrat und Calciumaluminaten . Forschungsbericht Nr. 2/84, Forschungsgemeinschaft der Deutschen Kalkindustrie, Köln, 1984.**

Bemerkungen:
Die Akte enthält technische Angaben, die nach dem Eingang der Anmeldung eingereicht wurden und die nicht in dieser Patentschrift enthalten sind.

**Beschreibung**

Schwefelsäure wird in der chemischen Industrie in außerordentlich großem Umfang eingesetzt. Die Hauptmenge wird zur Herstellung von Kunstdünger verbraucht. Sie dient ferner zur Herstellung der meisten anderen Mineralsäuren. Auch als Akkumulatorensäure werden beträchtliche Mengen Schwefelsäure eingesetzt. Außerdem wird Schwefelsäure beispielsweise in Prozeßbädern zur Oberflächenverbesserung, z.B. in Polierbädern der Glasindustrie (Gemisch aus 55 bis 85 % $H_2SO_4$, 0,5 bis 10 % HF), angewandt. Die Schwefelsäure-Produktion beträgt derzeit allein in der Bundesrepublik Deutschland etwa 5 Mio. t/a. Bei der Verarbeitung von Schwefelsäuren fallen entsprechend in den meisten Fällen $H_2SO_4$-haltige Abwässer an.

Aus Umweltschutzgründen werden ferner Kraftwerke und Großfeuerungsanlagen zunehmend mit Rauchgasentschwefelungsanlagen ausgestattet. Gemäß der Großfeuerungsanlagenverordnung der Bundesrepublik Deutschland müssen bis 1995 etwa 1,5 Mio. t $SO_2$ aus Kraftwerksabgasen abgeschieden werden. Die Abtrennung von $SO_2$ aus Rauchgasen erfolgt gegenwärtig überwiegend durch Neutralisation mit Kalk in Gaswaschanlagen. Dabei fallen ebenfalls $H_2SO_4$-haltige Abwässer an.

Sulfationen sind außerdem, obwohl toxikologisch relativ harmlos, betonaggressiv und führen zu einer Zerstörung von Abwasserkanälen aus Beton; in DIN 4030 sind Wässer mit 200 bis 600 mg/$SO_4^{2-}$/l als schwach, mit 600 bis 3000 mg $SO_4^{2-}$/l als stark und mit über 3000 mg $SO_4^{2-}$/l als sehr stark betonangreifend definiert.

Sulfate führen ferner zu einer aus Umweltschutzgründen unerwünschten Aufsalzung von Oberflächengewässern.

Die gesetzlich vorgeschriebenen Grenzwerte für den Sulfatgehalt von Abwässern, die in öffentliche Kanalnetze eingeleitet werden, liegen allgemein zumeist im Bereich von 400 bis 600 mg $SO_4^{2-}$/l. Um diese Grenzwerte einzuhalten, müssen Verfahren zur Verringerung der Sulfatkonzentration angewandt werden, da eine einfache Verdünnung von Schwefelsäurelösungen mit Leitungswasser oder anderen Abwässern keine wirtschaftlich und ökologisch geeignete Lösung darstellt. Hierzu wird die Sulfatabtrennung durch Ausfällung von Calciumsulfat (Gips) mit Calciumhydroxid (Kalkmilch) bei gleichzeitiger Neutralisation der Abwässer angewandt (C. J. Lewis, R.S. Boynton, NLA Bulletin 216 (1976)).

Bei der Neutralisation von schwefelsauren Abwässern mit Kalk wird gemäß der folgenden Reaktionsgleichung I

$$Ca^{2+} + 2OH^- + 2H^+ + SO_4^{2-} + nH_2O \rightarrow CaSO_4 \cdot 2H_2O + nH_2O \qquad (I)$$

Gips ($CaSO_4 \cdot 2H_2O$) gebildet, der aufgrund seiner relativ geringen Löslichkeit ausfällt.

Die Gipsfällung nach Reaktionsgleichung I verläuft allerdings oftmals nicht bis zur Löslichkeitsgrenze, so daß im Ablauf der Neutralisations- und Fällungsanlagen immer noch hohe Sulfatfrachten (1600 mg $SO_4^{2-}$/l und mehr) auftreten.

Aus den übersättigten Lösungen fällt ferner häufig an ungeeigneten Stellen Gips aus, der zu Ansatzbildungen in Leitungssystemen und Apparaturen führt.

Aufgrund des Löslichkeitsprodukts von Calciumsulfat bzw. Gips (6,1 $\cdot$ $10^{-5}$ mol/l (20 °C)) errechnet sich für den Gleichgewichtszustand eine Sulfatkonzentration in Lösung von 1200 mg $SO_4^{2-}$/l bei 20 °C.

Um die gesetzlich vorgeschriebenen Grenzwerte von 400 bis 600 mg $SO_4^{2-}$/l zur Einleitung von Abwässern in das Kanalnetz zu erreichen, müssen die mit Kalkmilch behandelten Abwässer nach der Abtrennung des Calciumsulfats mit sulfatfreien Wässern verdünnt werden, wozu in der Regel kostbares Grundwasser verwendet werden muß. Da Grundwasser aber nicht unbegrenzt verfügbar ist und zu den schützenswerten Gütern der Industriegesellschaft gezählt wird, kann die Sulfatfällung als $CaSO_4$ nur als Behelf angesehen werden, obgleich sie die bisher wirtschaftlichste und toxikologisch unbedenklichste Methode darstellt. Eine weitergehende Absenkung der Sulfatkonzentration als durch Ausfällung von $CaSO_4$ ist theoretisch durch Einbringen von Barium- bzw. Strontiumionen möglich, da die entstehenden Sulfate ein niedrigeres Löslichkeitsprodukt als $CaSO_4$ aufweisen.($BaSO_4$: 1,1 $\cdot$ $10^{-10}$ mol/l (20 °C); $SrSO_4$: 3,81 $\cdot$ $10^{-7}$ mol/l (17 °C)). Die Verwendung solcher Salze für die großtechnische Abwasseraufbereitung wird jedoch aufgrund ihrer Toxizität sowie aus wirtschaftlichen Erwägungen ausgeschlossen.

Die Ausfällung von Calciumaluminatsulfaten aus wässerigen, Sulfat enthaltenden Lösungen durch Zusatz von Calciumhydroxid und Calciumsalzen bei Anfangs-pH-Werten im Bereich von etwa 9 bis etwa 11,8 war aus Journal WPCF 48 (1976) 2804 - 2808 und 50 (1978) 1821 - 1826 anhand labormäßiger Untersuchungen an synthetischen Abwässern bekannt. Abgesehen von dem Umstand, daß durch diese Verfahren anstelle der Sulfationen andere störende Anionen, wie Chlorid und Nitrat, in das Abwasser eingeführt werden, was bereits eine industrielle Anwendung dieser Verfahren aus wirtschaftlichen und insbesondere abwassertechnologischen Gründen ausschließt, lassen sich diese Verfahren wegen der außerordentlich langen Reaktionszeiten und der dadurch bedingten hohen Reaktorvolumina nicht auf reale Industrieabwässer anwenden.

Eine weitere, prinzipiell geeignetere Möglichkeit, die Sulfationenkonzentration unter die $CaSO_4$-Löslichkeit zu senken, besteht in der Verwendung von Aluminaten, wobei gleichzeitig Calciumionen in geringem Überschuß vorliegen müssen. Unter diesen Bedingungen kann sich das stabile Calciumaluminatsulfat Ettringit ($3CaO \cdot Al_2O_3 \cdot 3CaSO_4 \cdot 32H_2O$ bzw. $Ca_6Al_2[(OH)_4SO_4]_3 \cdot 26H_2O$) bilden. In kalkhaltigen Wässern ist die Löslichkeit des Ettringits sehr gering. So sind bei 50 mg CaO/l nur etwa 250 mg Ettringit/l gelöst, was einer Sulfationenkonzentration von 5,5 mg $SO_4^{2-}$/l entspricht.

Die Bildung von Ettringit tritt allerdings nur unter sehr speziellen Bedingungen auf (F.E. Jones, The quaternary systems $CaO-Al_2O_3-CaSO_4-H_2O$ at 25 °C, J. Phys. Chem. 48 (1944) 311-356; J. D'Ans, H. Eick, Das System $CaO-Al_2O_3-CaSO_4-H_2O$, Zement-Kalk-Gips 6 (1953) 302-311; W. Eitel, Recent investigations of the system lime-alumina-calcium sulphate-water and its importance in building research problems, J. Amer. Concr. Inst. 28 (1957) 679-698).

Aus Can. J. Chem. 38 (1960) 1218 - 1226 war die Calciumaluminatsulfat-Bildung aus Calciumaluminaten und gemischten $Ca(OH)_2$ - $CaSO_4$-Lösungen unter Laborbedingungen bei erhöhten Temperaturen im Bereich der Siedetemperatur entsprechender Fällungssysteme bekannt, für die außerordentlich lange Reaktionszeiten von bis zu 70 Tagen angegeben sind. Ein diesbezüglichr pH-Einfluß wurde nicht untersucht.

Erst in jüngster Zeit wurden Kristallisationen in derartigen Fällungssystemen in größerem Maßstab näher untersucht (vgl. H. G. Keller, M. Mehlmann, N. Peschen, Untersuchung zur Senkung der Sulfationenkonzentration in Abwässern durch Zugabe von Kalkhydrat und Calciumaluminaten, Forschungsbericht Nr. 2/84 der Forschungsgemeinschaft der Deutschen Kalkindustrie e.V., Köln).

Über die Bildungsgeschwindigkeit von Ettringit werden unterschiedliche Angaben gemacht. So geben D'Ans/Eick (loc. cit.) für den quantitativen Umsatz einer Aluminiumsulfatlösung mit einer gesättigten Kalk-Gips-Lösung 14 Tage an, während von anderen Autoren (H.E. Schwiete, U. Ludwig, P. Jäger, Untersuchungen im System $3CaO-Al_2O_3-CaSO_4-CaO-H_2O$, Zement-Kalk-Gips 17, Nr. 6 (1964) 229-236) die Ettringitbildung im Reaktionssystem $3CaO \cdot Al_2O_3$ - Gips - $Ca(OH)_2$ in wässerigem Medium schon nach Ablauf einiger Stunden beobachtet wurde.

Die Bildung von Ettringit erfolgt in Gegenwart von $CaSO_4$, das auch aus der oben erläuterten Vorfällung mit $Ca(OH)_2$ stammen kann, nach Reaktionsgleichung II:

$$3CaO \cdot Al_2O_3 + 3CaSO_4 \rightarrow 3CaO \cdot Al_2O_3 \cdot 3CaSO_4 \cdot 32H_2O \qquad (II),$$

kann jedoch auch nach folgender Reaktionsgleichung IIa erfolgen:

$$CaO \cdot Al_2O_3 + 3H_2SO_4 + 29H_2O + 5CaO \rightarrow 3CaO \cdot Al_2O_3 \cdot 3CaSO_4 \cdot 32H_2O \qquad (IIa).$$

Im folgenden werden die nachstehenden Abkürzungen verwendet:

| | |
|---|---|
| A | $= Al_2O_3$ |
| $A_\alpha$ | $= \alpha\text{-}Al_2O_3$ |
| $CA_2$ | $= CaO \cdot 2Al_2O_3$ |
| $C\bar{S}_3$ | $= 3CaSO_4$ |
| $C_3A$ | $= 3CaO \cdot Al_2O_3$ |
| $C_{1,8}A$ | $= 1,8\ CaO \cdot Al_2O_3$ |
| $C_{12}A_7$ | $= 12CaO \cdot 7Al_2O_3$ |
| $C_2S$ | $= 2CaO \cdot SiO_2$ |
| $C_4AF$ | $= 4CaO \cdot Al_2O_3 \cdot Fe_2O_3$ |
| CA | $= CaO \cdot Al_2O_3$ |
| $C_2AS$ | $= 2CaO \cdot Al_2O_3 \cdot SiO_2$ |
| TSZ 1 | = Tonerdeschmelzzement Lafarge Fondu |
| TSZ 2 | = Tonerdeschmelzzement Lafarge Secar 50 |
| TSZ 3 | = Tonerdeschmelzzement Lafarge Secar 70 |
| TSZ 4 | = Tonerdeschmelzzement Lafarge Secar 80 |
| $Al_2O_3$-RM | $= Al_2O_3$-Rotmasse ($Al_2O_3$-haltige Komponente) |
| aq | $= H_2O$ |
| KM | = Kalkmilch |
| $CS_3$ | $= CaO \cdot 3SiO_2$. |

Von D'Ans und Eick (loc. cit.) wurde nachgewiesen, daß im System $CaO-Al_2O_3-CaSO_4-H_2O$ bei 20 °C folgende quaternäre Systeme auftreten:

1. $C_3A \cdot 3CaSO_4 \cdot 32H_2O$ (Ettringit)
2. $C_3A \cdot CaSO_4 \cdot 12H_2O$ (Tricalciumaluminat-monosulfat, Monosulfoaluminat).

Beide sollen miteinander feste Lösungen bilden können. Verbindung 2 wandelt sich durch Kontakt mit Gipswasser in Verbindung 1 um und wird aus diesem Grunde als metastabil bezeichnet.

Es wurde zwar nachgewiesen, daß sich Ettringit bei Bedingungen nach Reaktionsgleichung III

$$6Ca(OH)_2 + Al_2(SO_4)_3 + aq \rightarrow 3CaO \cdot Al_2O_3 \cdot 3CaSO_4 \cdot 32H_2O + aq \qquad\qquad (III)$$

bei Temperaturen über. 40 °C nicht mehr bildet, in festem Zustand erfährt Ettringit jedoch weder bei 40 °C noch bei wesentlich höheren Temperaturen eine Umwandlung.

Ist die einer übersättigten Aluminatlösung zugegebene Gipsmenge so berechnet, daß sie gegenüber dem Monosulfoaluminat im Überschuß vorliegt, verschwindet mit steigender Gipsmenge das Monosulfoaluminat zugunsten des Ettringits.

Ferner wurde festgestellt (H.Y. Gorab und S.H.Abon El Fatonh, Neue Betrachtung der Hydratationsreaktion $C_3A$ mit Gips bei 30 °C, Teil 1 und 2, Zement-Kalk-Gips 38, Nr. 5+6 (1985), 267-270 (Teil 1) und 332-334 (Teil 2)), daß die Hydratation von $C_3A$ in Gegenwart von Gips und einem Kalküberschuß durch Alkali stark beschleunigt wird. Mit 0,1 n NaOH bilden sich Ettringit und Monosulfoaluminat bereits in den ersten zwei Minuten der Hydratation, und die Menge an reagieremdem $C_3A$ steigt an. Da in einer Ca-reichen Lösung die Ettringitbildung begünstigt wird, steigert ein Kalküberschuß deutlich die spontane Reaktion von Gips und $C_3A$.

Das dem Stand der Technik entsprechende Verfahren nach Keller/Mehlmann und Peschen (loc. cit.) erlaubt eine Abtrennung von Sulfationen aus Abwässern bis zu Restkonzentrationen < 5 mg/l unter Bildung von Calciumaluminatsulfaten, wofür allerdings unter den derart angewandten Verfahrensbedingungen außerordentlich lange Fällungszeiten von etwa 10 bis 12 h erforderlich sind, was aus großtechnischer Sicht sowohl hinsichtlich der erforderlichen Apparategrößen als auch hinsichtlich der Wirtschaftlichkeit des Prozesses außerordentlich nachteilig ist (vgl. Keller, Mehlmann, Peschen, loc. cit., S. 20, 2. Abs.).

Der Erfindung liegt entsprechend die Aufgabe zugrunde, ausgehend von diesem Stand der Technik ein Verfahren zur hochwirksamen Abtrennung von Sulfationen aus Industrieabwässern anzugeben, mit dem erheblich unter der durch die Löslichkeit von $CaSO_4$ bedingten Sulfationenkonzentration liegende $SO_4^{2-}$-Konzentrationen in zur großtechnischen Anwendung ausreichend kurzen Reaktionszeiten, insbesondere nicht mehr als etwa 5 h, und ohne apparativen Mehraufwand gegenüber der herkömmlichen Verfahrensweise erzielt werden können.

Die Aufgabe wird gemäß Anspruch 1 gelöst. Vorteilhafte Ausführungsformen des erfindungsgemäßen Verfahrens sind Gegenstand der abhängigen Ansprüche.

Die Erfindung beruht insbesondere auf der überraschenden Feststellung, daß der pH-Wert während der Fällungsreaktion mit Calciumaluminat fällt und durch entsprechende Konstanthaltung des pH-Werts das Verfahrensergebnis in signifikanter Weise verbessert werden kann, da dann niedrige Restsulfatkonzentrationen $\leqq$ 5 mg $SO_4^{2-}$/l in außerordentlich kurzen Reaktionszeiten bis maximal 5 h erzielbar sind.

Wird andererseits der pH-Wert nach der anfänglichen Einstellung auf 11,2 bis 11,8 und insbesondere 11,6 ± 0,1 nicht konstantgehalten, kann keine meßbare Senkung der Sulfationenkonzentration erzielt werden.

Das erfindungsgemäße Verfahren zur Abtrennung von Sulfationen aus Industrieabwässern durch

(A) Ausfällung von schwerlöslichen Calciumaluminatsulfaten
durch Zusatz von reaktivem Aluminiumoxid und/oder von Calciumaluminaten zum Abwasser
unter mechanischer Durchmischung und pH-Einstellung mit $Ca(OH)_2$ auf einen Wert im Bereich von 11,2 bis 11,8
und

(B) Abtrennung der gebildeten Calciumaluminatsulfate ist dadurch gekennzeichnet, daß in Stufe (A),

(A1) als schwerlösliches Calciumaluminatsulfat Ettringit ausgefällt wird,
(A2) das reaktive Aluminiumoxid und/oder das bzw. die Calciumaluminate gleichzeitig mit der pH-Einstellung oder danach in einer Menge, die um bis zu 20 % größer ist als die theoretisch zur Bildung von Ettringit für die jeweils vorliegende Sulfationenkonzentration des Abwassers bzw. des Ablaufwassers der Vorfällung erforderliche stöchiometrische Menge, zugesetzt werden,
(A3) der durch pH-Messung im Fällungsreaktor gemessene pH-Wert des erhaltenen Fällungssystems während der gesamten Dauer der Fällungsreaktion durch separate Zudosierung von $Ca(OH)_2$ in fester Form oder von Kalkmilch auf 11,2 bis 11,8 konstantgehalten wird und
(A4) die Fällungsreaktion bei einer Temperatur von 25 bis 35 °C durchgeführt wird.

Je nach dem anfänglichen Sulfationengehalt des Abwassers kann eine Vorfällung von Gips mit Calciumhydroxid der Sulfatfällung mit Calciumaluminaten vorgeschaltet werden, die folgende wesentliche Verfahrensstufen umfaßt:

(a) Ausfällung von Calciumsulfat durch Zusatz von Calciumhydroxid bzw. Kalkhydrat zum Abwasser unter mechanischer Durchmischung und pH-Kontrolle und
(b) Abtrennung des ausgefällten Calciumsulfats,

wobei das in Stufe (b) erhaltene Ablaufwasser in Stufe (A) eingeführt wird.

Die Erfindung wird im folgenden anhand von Ausführungsbeispielen näher erläutert.

Verwendete Vorrichtung:

Die Versuche wurden mit einem handelsüblichen Reihenrührwerk mit fünf Rührstellen und von 50 bis 1000 min$^{-1}$ stufenlos verstellbarer Rührerdrehzahl durchgeführt.

Rührer: Je ein Propellerrührer, Schaft 6 mm Durchmesser, Rührer 50 mm Durchmesser, Länge Schaft 350 mm;

Rührgefäße: 1-l-Bechergläser, hohe Form;

Eintauchtiefe: bis ca. 2 cm über den Becherglasboden.

Die Rührer waren exzentrisch angeordnet, um Tromben- und Sogbildung zu vermeiden und eine optimale Durchmischung zu gewährleisten.

Es wurde ein künstliches Abwasser in Form einer verdünnten Schwefelsäure mit einem Sulfatgehalt von etwa 3000 mg/l eingesetzt. Bei sämtlichen Versuchen wurden 0,5 l künstliches Abwasser im Becherglas vorgelegt, eine pH-Elektrode angebracht, das Rührwerk in Gang gesetzt und das bzw. die Fällungsmittel zugesetzt. Die Bestimmung des Sulfatgehalts erfolgte mit einem Spektralphotometer turbidimetrisch in bestimmten Zeitabständen.

Weitere Versuchsparameter:

| | |
|---|---|
| Rührerdrehzahl: | 400 min$^{-1}$; |
| pH-Wert am Anfang: | 1,0; |
| Temperatur: | 17 °C. |

Vorfällung:

Aus der Literatur (W. Götzelmann, L. Hartinger, Das Sulfatproblem der Direkteinleiter, Galvanotechnik 71, Nr. 7 (1980) 699-705) war für die Reaktion von Schwefelsäure und Calciumhydroxid bekannt, daß der pH-Wert auf die Sulfatfällung oberhalb des Neutralisationspunkts keinen Einfluß hat. Dies konnte für das eingesetzte künstliche Abwasser bestätigt werden.

Calciumaluminatfällung:

Der pH-Wert des Abwassers wurde mit 20-%iger Kalkmilch auf 11,6 ± 0,1 eingestellt, worauf Calciumaluminate in Form von Tonerdeschmelzzement (TSZ) zugesetzt wurden.

Der pH-Wert wurde während der gesamten Dauer der Fällungsreaktion durch Zudosieren von Kalkmilch konstantgehalten.

Die erhaltenen Ergebnisse sind in Tabelle 1 zusammengefaßt.

Tabelle 1

| eingesetzte Menge TSZ (g) | TSZ 1 | | TSZ 2 | | TSZ 3 | |
|---|---|---|---|---|---|---|
| | 2 h | 3 h | 2 h | 3h | 2 h | 3 h |
| 5,0 | 50 | < 20 | < 50 | - | 50 | < 20 |
| 4,0 | 1350 | < 50 | 850 | < 50 | 1650 | < 50 |
| 3,0 | 1500 | < 50 | 850 | < 50 | 1550 | < 50 |
| 2,5 | 1150 | 450 | < 50 | - | 900 | < 50 |
| 2,0 | 1600 | < 50 | 600 | < 50 | 950 | < 50 |

*Sulfatgehalt des künstlichen Abwassers in mg/l nach 2 h und 3 h Reaktionsdauer bei Einsatz verschiedener Mengen an TSZ*

Es ist im Rahmen des Erfindungskonzepts wesentlich, den pH-Wert bei der Sulfatfällung mit Calciumaluminaten nicht nur in bestimmten Zeitabständen anzuheben, sondern ihn durch kontinuierliche Zudosierung von Kalkmilch bzw. Kalkhydrat dauernd konstantzuhalten, da längere Dosierpausen zu einer deutlichen Reaktionsverzögerung führen.

Weitere Versuche wurden mit TSZ 1, 2, 3 und 4 sowie Gemischen mit $Al_2O_3$-Rotmasse ($Al_2O_3$-RM) durchgeführt. Die chemische und mineralogische Zusammensetzung der verwendeten Fällungsmittel ist in Tabelle 2 angegeben.

Tabelle 2

| | Hauptbestandteile (Masse-%) | | | | Mineralogische Zusammensetzung | |
|---|---|---|---|---|---|---|
| | $Al_2O_3$ | CaO | $SiO_2$ | $Fe_2O_3$ | Hauptbestandteil | Nebenbestandteil |
| TSZ 1 | 39 | 38,5 | 4,5 | 12 | CA | $C_{12}A_7$ $C_2S$ $C_4AF$ |
| TSZ 2 | 50,5 | 36,3, | 6,9 | 2,35 | CA | $A_\alpha$ $C_2AS$ $C_2S$ |
| TSZ 3 | 70,5 | 28,7 | 0,35 | 0,1 | CA | $CA_2$ |
| TSZ 4 | 80,5 | 18 | 0,2 | 0,15 | CA | $A_\alpha$ |
| $Al_2O_3$-RM | 28 | 0,6 | 9,3 | 30 | | $CA_2$ |
| Kaolin | 37 | | 47 | 0,6 | | |
| Bauxit | 63,8 | | 2 | 4,4 | | |
| $Al(OH)_3$ | $Al(OH)_3$ 98,7 | | | 0,2 | | |

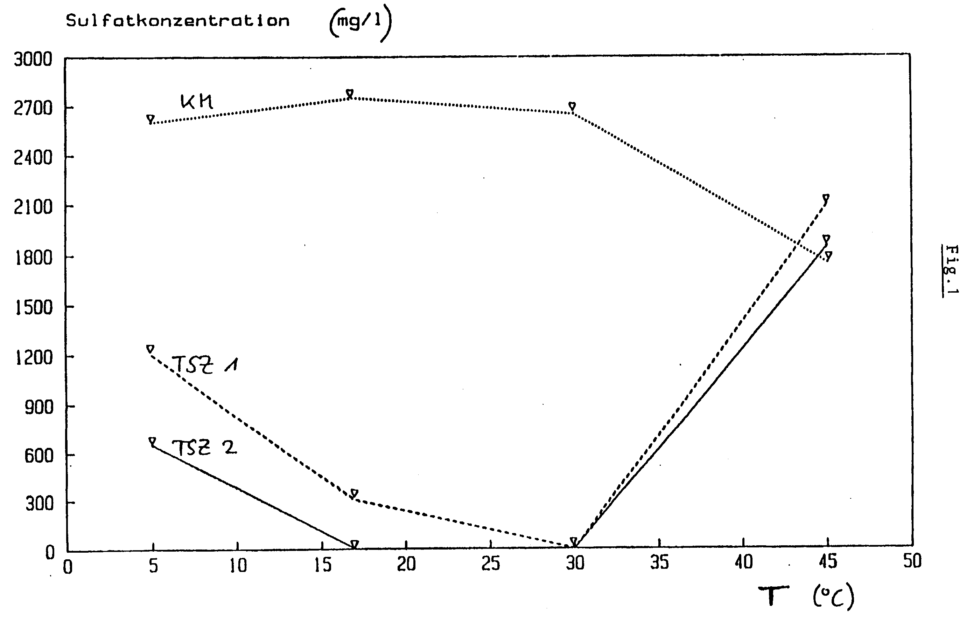

Ergebnisse von Untersuchungen zur Temperaturabhängigkeit der Rest-Sulfatkonzentration bei Sulfatfällung in Stufe (A) mit Tonerdeschmelzzementen (TSZ) bzw. Kalkmilch (KM) unter den übrigen, oben genannten Verfahrensbedingungen sind in Fig. 1 dargestellt (Verfahrensdauer 3 h; pH-Wert Stufe (A) 11,6 ± 0,1; jeweils 2,5 g TSZ/l; pH-Einstellung mit 20-%iger Kalkmilch).

Die Ergebnisse von Fig. 1 zeigen unmittelbar, daß mit Tonerdeschmelzzementen unter den angegebenen pH-Bedingungen extrem niedrige Restsulfatkonzentrationen erzielbar sind, wobei der Temperaturbereich von 25 bis 35 °C optimal ist, da in diesem Bereich sehr geringe Restsulfatkonzentrationen bei zugleich sehr kurzen Reaktionszeiten (3 h) erzielt werden.

Außerdem zeigt Fig. 1, daß sich die Ausfällung von $CaSO_4 \cdot 2H_2O$ verbessert und entsprechend niedrigere Restsulfatkonzentrationen vorliegen, wenn die Vorfällung in Stufe (a) bei einer Temperatur von 30 bis 45 °C vorgenommen wird, was mit der aus der Literatur bekannten Temperaturabhängigkeit der Löslichkeit von Gips in Einklang steht.

Weitere Versuche wurden mit technischen Abwässern aus der Glasindustrie (Säurepolierbad mit $H_2SO_4$ und HF, Abwasser 1) sowie aus der chemischen Industrie (Abwasser 2) durchgeführt.

Abwasser 2 wies eine niedrige Sulfat-Ausgangskonzentration auf und enthielt löslichkeitserhöhende Komponenten, wie organische Säuren, $NO_2^-$ und $NO_3^-$.

Die Zusammensetzung der eingesetzten Abwässer ist in Tabelle 3 angegeben.

Tabelle 3

| Zusammensetzung (mg/l) | $SO_4^{2-}$ | $Al^{3+}$ | $Pb^{2+}$ | $F^-$ | $As^{3+}$ |
|---|---|---|---|---|---|
| Abwasser 1 | 70000 | 41,5 | 5,4 | 14000 | 46 |
| Abwasser 2 | 3150 | 0,2 | - | - | - |

Die Sulfatbestimmung erfolgte durch Spektralphotometrie turbidimetrisch; Al und Pb und As wurden durch Auger-Elektronen-Spektrometrie (AES) mit induktiv gekoppeltem Plasma (ICP) bestimmt; die Fluoridbestimmung geschah potentiometrisch mit einer ionenselektiven Elektrode. Bei den Versuchen wurde im übrigen wie oben bei dem künstlichen Abwasser verfahren, wobei eine Rührerdrehzahl von 500 $min^{-1}$ eingestellt wurde, der pH-Wert am Anfang 0,7 bis 1,1 betrug und die Fällungen bei 20 und 30 °C vorgenommen wurden. Die Vorfällung (a) wurde während 20 min, die Calciumaluminatfällung in Stufe (A) bis maximal 5 h durchgeführt.

Bei der exothermen Reaktion von $Ca(OH)_2$ mit $H_2SO_4$ stieg bei der Vorfällung in Stufe (a) die Temperatur von 17 auf 40 °C an und sank während der anschließenden TSZ-Fällung auf ca. 20 °C.

Abwasser 1

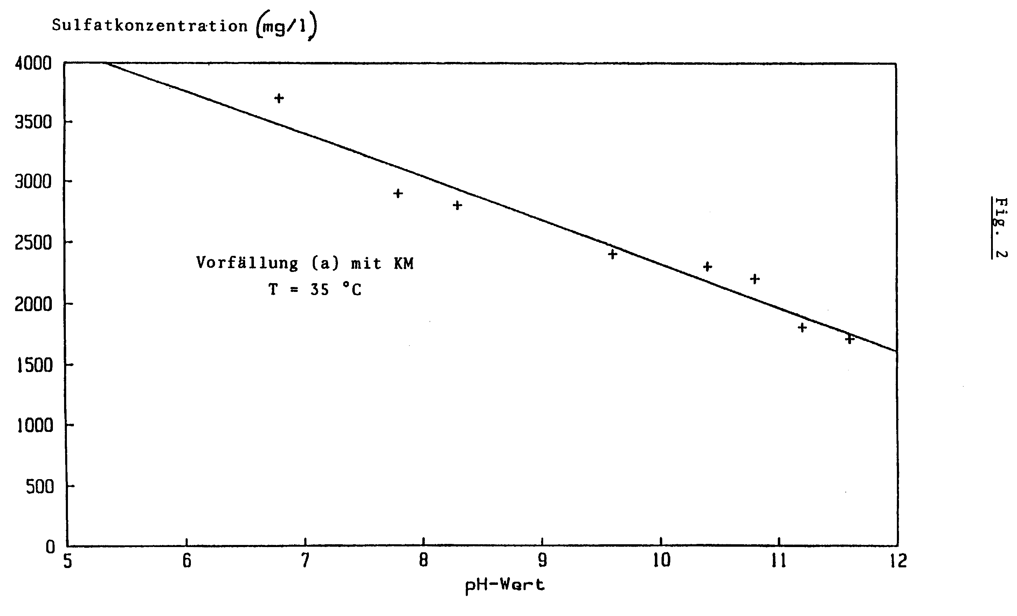

Beim Abwasser 1 mit hoher Sulfat-Konzentration wurde ferner im Gegensatz zu den Untersuchungen mit dem künstlichen Abwasser eine deutliche Abhängigkeit der Ausbeute der Vorfällung vom pH-Wert festgestellt, wie aus Fig. 2 hervorgeht. Bei gleicher Reaktionszeit (20 bis 30 min) sank der Sulfatgehalt von 3700 mg/l bei pH 6,8 auf 1700 mg/l bei pH 11,6.

Die Ursache für die weitergehende Ausfällung unter diesen Bedingungen liegt offenbar im hohen Schlammanfall. Dieser Schlamm wirkt als Kontaktmasse und unterstützt die Fällung. Trennt man den Niederschlag nicht ab, so kann man während des Alterungsprozesses (bis 5 h), bei dem die kleinen Kristalle auf Kosten der großen in Lösung gehen, einen Anstieg der Sulfatkonzentration auf etwa 2000 mg/l feststellen.

Die Vorfällung wird vorteilhaft bei Temperaturen im Bereich von 40 bis 45 °C vorgenommen.

Die Versuche zeigten ferner, daß es nicht zweckmäßig ist, den für die TSZ-Fällung festgelegten pH-Wert von 11,6 ± 0,1 schon bei der Vorfällung mit Kalkmilch einzustellen, da sich dann nach Abtrennung des Schlamms zu wenig Gipskeime in der Lösung befinden. Deswegen wurde die Vorfällung bei pH 10,5 bis 11,0 durchgeführt. Dadurch wurde die Sulfatkonzentration zwar nur auf etwa 2000 mg/l gesenkt, jedoch waren bei der anschließenden TSZ-Fällung nach Anhebung des pH-Werts auf 11,6 ± 0,1 mit KM genügend Gipskeime in der Lösung, um die gewünschte Fällungsreaktion zu gewährleisten.

Es besteht aber die alternative Möglichkeit, den pH-Wert beider Vorfällung auf 11,6 ± 0,1 einzustellen, wobei dann eine Schlamm ein führung aus Stufe (b) in Stufe (A) vorgenommen wird.

Die Gesamtreaktionszeiten lagen erheblich unter 5 h.

Ferner ergab sich, daß beim Einsatz der doppelten stöchiometrischen Menge an TSZ, bezogen auf die zur Bildung von Ettringit bei der vorliegenden Sulfationenkonzentration erforderliche stöchiometrische Menge an TSZ, die Reaktion bereits nach 2 h abgeschlossen und der Restsulfatgehalt kaum meßbar war. Beim Einsatz stöchiometrischer Mengen TSZ betrug die Restsulfatkonzentration im Ablaufwasser nach 5 h

bei TSZ 1 (1,8 g/l) 350 mg $SO_4^{2-}$/l und

bei TSZ 2 (1,5 g/l) 400 mg $SO_4^{2-}$/l.

Dabei betrug der pH-Wert bei der Vorfällung etwa 11 und bei der TSZ-Fällung 11,6 ± 0,1 unter kontinuierlicher Konstanthaltung des pH-Werts. Die Temperatur wurde bei der TSZ-Fällung konstant auf 30 °C gehalten. Beide Proben zeigten gutes Absetzverhalten.

Beim Einsatz von Gemischen aus TSZ und $Al_2O_3$-RM wurden ähnlich gute Ergebnisse erhalten, wobei ein Vorteil darin liegt, daß das Absetzverhalten und die Filtrierbarkeit verbessert wurden. Die Ergebnisse sind in Tabelle 4 zusammengefaßt. Es konnte keine weitere Senkung der Schwermetallgehalte festgestellt werden. Außerdem wurde keines der untersuchten Elemente zusätzlich eingebracht. Der Al-Gehalt im Abwasser wurde ferner wesentlich verbessert.

Bei der Zugabe des TSZ als wässerige Suspension wie auch als Festsubstanz wurden gleich gute Ergebnisse erzielt.

Bereits bei der Vorfällung in Stufe (a) mit 20 %iger KM konnte die Pb-Ionenkonzentration von 4,6 auf 0,1 mg/l verringert werden. Der in der Bundesrepublik Deutschland gesetzlich vorgeschriebene Maximalwert der Pb-Ionenkonzentration für die Einleitung in öffentliche Abwasseranlagen beträgt 2 mg/l. Das vorliegende Blei wurde also nahezu vollständig als $PbSO_4$ und $Pb(OH)_2$ gefällt.

In weiteren Versuchen wurden Calciumaluminate $CA/C_3A$ aus stöchiometrischen Mengen

| CaO | + $Al_2O_3$-RM |
| Kalksteinmehl | + $Al_2O_3$-RM |
| $CaCO_3$ (Rohmehl) | + $Al_2O_3$-RM |
| Rohmehl = Ausgangsmaterial für Zementherstellung | |

hergestellt, die bei 1000 und 1150 °C erbrannt wurden. Diese Calciumaluminate führten zu einer Senkung des Sulfatgehalts auf Werte um 1300 mg $SO_4^{2-}$/l, die unter dem Löslichkeitsprodukt von $CaSO_4$ entsprechenden Werten liegen. Beim Einsatz eines aus Kalksteinmehl + $Al_2O_3$ p.A. bei 1300 °C über 12 h erbrannten $C_3A$ wurden Sulfat-Ablaufwerte von nur 190 mg/l gemessen.

Tabelle 4

| Probe Nr. | Zusammensetzung (mg/l) | $SO_4^{2-}$ | $Pb^{2+}$ | $As^{3+}$ | $Al^{3+}$ | $Fe^{3+}$ | $K^+$ | $Na^+$ | $F^-$ |
|---|---|---|---|---|---|---|---|---|---|
| | Abwasser 1 | | | | | | | | |
| 1 | Nullprobe (Rohabwasser) | 63000 | 4,6 | 46 | 38,5 | 22 | 390 | 177 | 14000 |
| 2 | Abwasser 1 TSZ 1 (3 g/l) | 445 | 0,1 | 17 | 7,5 | 0,1 | 230 | 104 | 24,5 |
| 3 | Al$_2$O$_3$-RM (3 g/l) TSZ 2 (2 g/l) Al$_2$O$_3$-RM (3 g/l) | 288 | < 0,1 | 17 | 11,3 | 0,1 | 230 | 104 | 24,1 |
| 4 | TSZ 1 (1,5 g/l) | 290 | < 0,1 | 21 | 51,5 | 0,1 | 200 | 89 | - |
| 5 | TSZ 2 (1,8 g/l) | 263 | < 0,1 | 23 | 41,0 | 0,1 | 180 | 82 | - |
| 5a | TSZ 2 (3 g/l) Al$_2$O$_3$-RM (3 g/l) | 410 | < 0,1 | 18 | 37,2 | 0,2 | 240 | 100 | 23,6 |
| 5b | TSZ 2 (2 g/l) Al$_2$O$_3$-RM (2 g/l) | 383 | < 0,1 | 16 | 84,7 | 0,2 | 240 | 95 | 22,1 |
| 5c | Vorfällung mit KM 20 % | 1900 | 0,1 | 18 | - | - | - | - | - |

Durch Röntgenbeugungsuntersuchungen wurde die Phasenzusammensetzung verschiedener erhaltener Fällungsprodukte ermittelt, deren Ergebnisse in Tabelle 5 zusammengefaßt sind.

Tabelle 5

| Probe Nr. | Kurzbeschreibung der Herstellung | gefundene Phasen |
|---|---|---|
| 2 | Fällung mit TSZ 1 (3 g/l) + Al$_2$O$_3$-RM (3 g/l) | Ettringit |
| 3 | Fällung mit TSZ 2 (2 g/l) + Al$_2$O$_3$-RM (3 g/l) | Ettringit, Calcit |
| 4 | Fällung mit TSZ 2 (1,4 g/l) | Calcit |
| 5 | Fällung mit TSZ 1 (1,8 g/l) | keine kristallinen Phasen |
| 6 | Vorfällung mit KM 20 % | $CaSO_4 \cdot 0,5H_2O$ |
| 7 | Fällung mit TSZ 2 (3 g/l) | Monosulfat* ($10H_2O$) |
| 8 | Fällung mit TSZ 1 (4 g/l) | Monosulfat* ($10H_2O$), ($13H_2O$) |

\* Monosulfat = Monosulfoaluminat

Bei Einsatz der doppelten stöchiometrischen Menge (Proben 7 und 8) und Einhaltung optimierter Versuchsbedingungen trat bereits überwiegend Monosulfat auf. Wie bereits angegeben, war hier die Reaktion nach 2 h abgeschlossen. Dies deutet darauf hin, daß die Bildungstendenz des Monosulfats bei entsprechendem TSZ-Angebot größer ist und so eine deutliche Reaktionsbeschleunigung resultiert.

Die Ettringitbildung konnte auch bei den Proben 4 und 5 nicht nachgewiesen werden. Diese Proben waren im Vergleich zu den Proben 2 und 3 nicht im Trockenschrank bei 105 °C getrocknet, sondern luftgetrocknet. Hier liegen vermutlich kryptokristalline bzw. amorphe Bestandteile vor, die durch Röntgenbeugung nicht erfaßbar sind. Die Grenze der Erfaßbarkeit liegt bei einer Teilchengröße von 1 μm.

Bei den Proben 2 und 3 konnte dagegen das Vorliegen von Ettringit eindeutig nachgewiesen werden.

Da die oben erläuterten Proben unmittelbar nach Versuchsende aufbereitet wurden, entfiel der Alterungsprozeß, der die Ausbildung größerer Ettringitkristalle bewirkt. Auch wurde bei Probe 6 kein $CaF_2$ nachgewiesen, obwohl im Rohabwasser 14000 mg $F^-$/l vorlagen und nach der Vorfällung mit KM 20 % noch etwa 24 mg $F^-$/l nachgewiesen wurden, was wohl ebenfalls auf die feine Verteilung zurückzuführen ist.

In Tabelle 6 sind die Ergebnisse von Röntgenbeugungsuntersuchungen an Proben aufgeführt, die unter Verwendung der wie oben beschrieben hergestellten Calciumaluminate erhalten waren.

Tabelle 6

| Probe Nr. | Kurzbeschreibung der Herstellung | gefundene Phasen |
|---|---|---|
| 9 | CaO + $Al_2O_3$-RM 1000 °C, 12 h | CaO, $C_3A$, $C_{1,8}A$, CA, $C_4AF$ |
| 10 | Kalksteinmehl + $Al_2O_3$-RM 1000 °C, 12 h | CaO, $C_3A$, $C_{1,8}A$, $C_4AF$ |
| 11 | Kalksteinmehl + $Al_2O_3$-RM 1150 °C, 12 h | CaO, $C_3A$, $C_{1,8}A$, $C_{12}A_7$, $C_4AF$ |

Geprüft wurden alle Phasen aus dem System $CaO$-$Al_2O_3$, über die nach ASTM Röntgendaten vorliegen. Die Intensitäten von CaO und $C_{1,8}A$ nehmen von Probe 9 zu Probe 11 ab, die von $C_3A$ und $C_4AF$ hingegen zu. Da mit der Probe 9 die besten Ergebnisse erzielt wurden, liegt es nahe, anzunehmen, daß die Komponente CA hier die entscheidende Rolle spielt, insbesondere dann, wenn man davon ausgeht, daß der zu bildende Ettringit über die Lösungsphase sich eher über CA als über $C_3A$ bildet.

Dafür spricht auch die Reaktionsfähigkeit der Tonerdeschmelzzemente, deren Hauptkomponente ebenfalls CA ist.

Abwasser 2

Bei diesem Abwasser aus der chemischen Industrie ergab sich aufgrund seines niedrigen Sulfatgehalts und der löslichkeitserhöhenden Komponenten nur eine geringfügige Senkung des Sulfatgehalts durch die Kalkmilchfällung in Stufe (a).

Wegen der löslichkeitserhöhenden Bestandteile des Abwassers war ein Einsatz des TSZ in etwa der doppelten stöchiometrischen Menge erforderlich.

Der pH-Wert wurde mit KM 20 % auf 11,6 ± 0,1 eingestellt; dann wurden 4 g/l TSZ 2 zugesetzt. Nach 3 h Kontaktzeit war der Sulfatgehalt auf 600 mg/l abgesunken. Um den Einsatz an TSZ zu reduzieren und das Verfahren dadurch noch wirtschaftlicher zu machen, wurde ein Gemisch aus TSZ 2/$Ca(OH)_2$/$Al_2O_3$-RM in Stufe (A) eingesetzt, da festgestellt worden war, daß $Al_2O_3$-RM die Ettringitbildung positiv beeinflußt.

So wurden mit einem Gemisch aus TSZ 2 (3 g/l) + $Ca(OH)_2$ (3 g/l) + $Al_2O_3$-RM (3 g/l) bereits nach 3 h Reaktionsdauer bei einer Temperatur von 30 °C nur noch 50 mg $SO_4^{2-}$/l im Ablaufwasser gemessen. Bei einer weiteren Verringerung der Einsatzmengen auf je 2,5 g Fällungsmittel war die Grenze erreicht, bei der nach einer Reaktionsdauer von 5 h der festgesetzte Grenzwert von 400 mg $SO_4^{2-}$/l knapp unterschritten wurde.

Bei allen Versuchen wurde der pH-Wert während der Reaktion mit KM 20 % auf dem Sollwert konstantgehalten.

Die erhaltenen Ergebnisse sind in Tabelle 7 zusammengefaßt.

Die Zugabe des Fällungsmittels in fester Form in Stufe (A) erwies sich in wirtschaftlicher wie apparativer Hinsicht als besonders vorteilhaft.

Tabelle 7

| Abwasser 2 $T = 30\ °C;\ t = 3 - 5\ h$ | | | | | | |
|---|---|---|---|---|---|---|
| Probe Nr. | Zusammensetzung (mg/l) | $SO_4^{2-}$ | $Fe^{3+}$ | $Al^{3+}$ | $K^+$ | $Na^+$ |
| 12 | Nullprobe (Rohabwasser) Abwasser 2 | 2700 | 1,9 | 0,2 | 1,8 | 13,2 |
| 13 | TSZ 2 (2,5 g/l) $Al_2O_3$-RM (3 g/l) $Ca(OH)_2$ (3 g/l) | 189 | 0,1 | 66,6 | 4,0 | 76 |
| 14 | TSZ 2 (2 g/l) $Al_2O_3$-RM (10 g/l) $Ca(OH)_2$ ( 3 g/l) | 506 | 0,3 | 31,1 | 3,3 | 270 |
| 15 | TSZ 2 (3 g/l) $Al_2O_3$-RM (3 g/l) $Ca(OH)_2$ (3 g/l) | 50 | - | - | - | - |

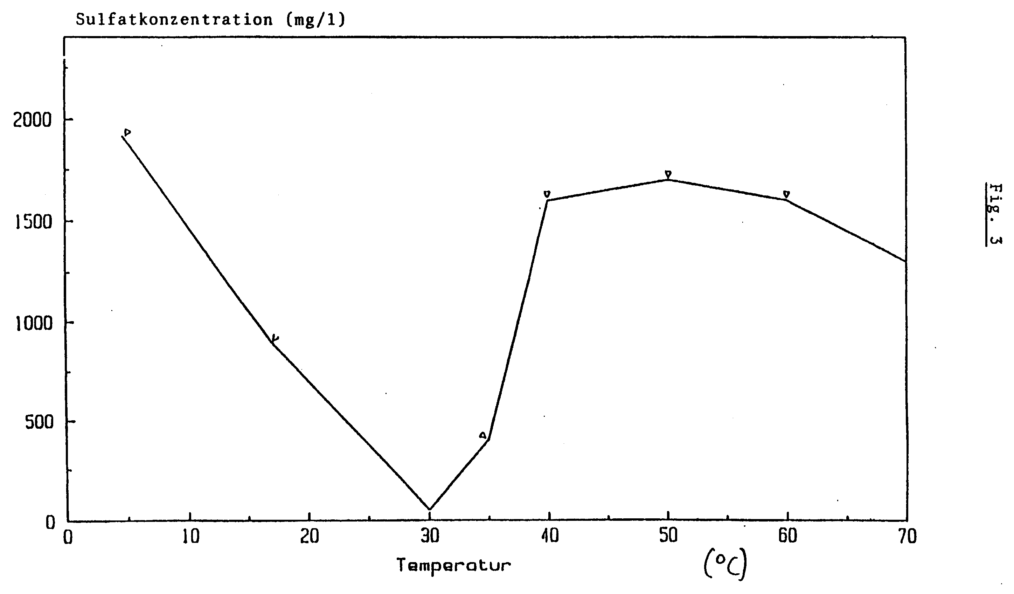

Mit dem für Probe 15 verwendeten Fällungsmittel wurden weitere Sulfatfällungen mit dem Abwasser 2 bei verschiedenen Temperaturen durchgeführt, deren Ergebnisse in Fig. 3 dargestellt sind (Fällungsdauer jeweils 3 h). Fig. 3 zeigt besonders deutlich das in diesem Fall bei etwa 30 °C liegende Temperaturoptimum.

Die folgenden Versuche wurden im halbtechnischen Maßstab absatzweise wie auch kontinuierlich durchgeführt. Eingesetzt wurde ein Abwasser aus der Glasindustrie mit etwa 35000 mg $SO_4^{2-}$/l.

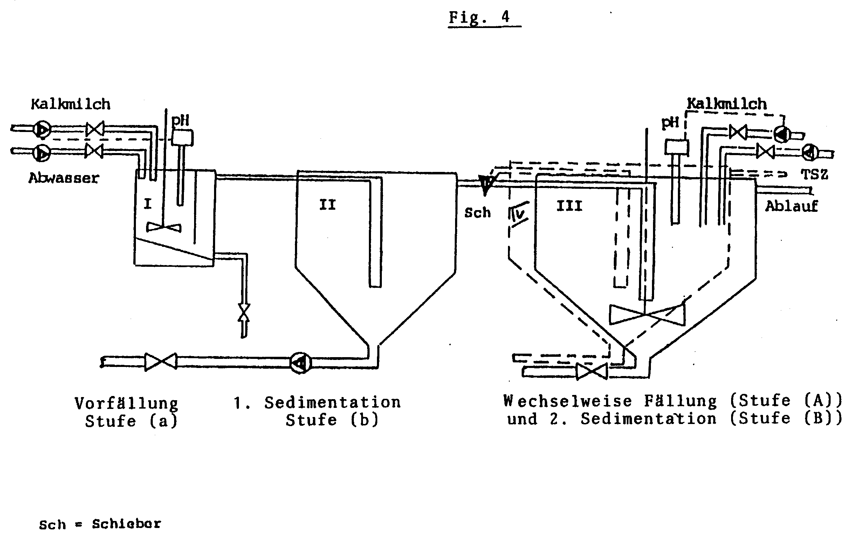

Hierzu wurde eine Vorrichtung verwendet, die in Fig. 4 schematisch dargestellt ist.

Sie umfaßt ein Vorfällbecken I mit Rührer und pH-Meßeinrichtung, ein dem Vorfällbecken I nachgeschaltetes erstes Sedimentationsbecken II, ein daran anschließendes Fällungsbecken III mit stufenlos regelbarem Rührer und pH-Meßeinrichtung sowie ein dem Fällungsbecken III nachgeschaltetes zweites Sedimentationsbecken IV. Das zu reinigende Abwasser (Volumenstrom 5 l/h) wurde im Vorfällbecken I einer Vorfällung mit Kalkmilch bei pH 10,5 unterzogen. Die Kalkmilchdosierung erfolgte pH-gesteuert mit einer Schlauchpumpe (O - 2 l/h). Vom ersten Sedimentationsbecken II gelangte das klare Abwasser in das Fällungsbecken III. Der pH-Wert wurde mit KM 20 % auf 11,6 ± 0,1 eingestellt. Die Dosierung erfolgte pH-Wert-gesteuert. Der TSZ wurde mengenproportional zudosiert. Die Vorrichtung wurde so betrieben, daß im Fällungsbecken III eine Verweilzeit von 3 h gewährleistet war. Vom Fällungsbecken III gelangte die TSZ-Suspension in das zweite Sedimentationsbecken IV.

Technische Daten sowie die Betriebsbedingungen dieser Vorrichtung sind in Tabelle 8 aufgeführt.

Chargenbetrieb:

Für den diskontinuierlichen Chargenbetrieb wurden das Fällungsbecken III und das 2. Sedimentationsbecken IV abwechselnd zur Fällung bzw. zur 2. Sedimentation herangezogen.

Tabelle 8

| | Vorfällbecken I Vorfällung | Erstes Sedimentationsbecken II 1. Sedimentation | Fällungsbecken III TSZ-Fällung | Zweites Sedimentationsbecken IV 2. Sedimentation |
|---|---|---|---|---|
| Volumen (l) | 7 | 35 | 35 | 90 |
| Vorbeschickung (l) | 6 | 30 | 20 | 0 |
| pH-Wert | 10,5 - 11 | 10,5 - 11 | $11,6 \pm 0,1$ | $11,6 \pm 0,1$ |
| Verweilzeit (h) | 0,2 | 1 | 3 | |
| Schlammrückführung | - | - | - | zum Fällungsbecken III |
| Dosierung KM 20 % | pH-Wert-gesteuert | - | pH-Wert-gesteuert | |
| Pumpen | KM 20 % : Schlauchpumpe (0 - 2 l/h) Abwasser : Membranpumpe (0,1 - 48 l/h) | - | KM : Schlauchpumpe (0 - 2 l/h) TSZ : Schlauchpumpe (0 - 7 l/h) | Schlammrückführung Schlauchpumpe (0 - 7 l/h) |
| Rührgeschwindigkeit $(min^{-1})$ | 500 | - | 500 | - |
| Temperatur (°C) | ca. 40 | ca. 35 | ca. 30 | 20 - 25 |
| Tab. 11: Technische Daten und Versuchsaufbau der Pilotanlage | | | | |

Der TSZ wurde in 10 % überstöchiometrischen Mengen zugesetzt, um Sedimentationsverluste auszugleichen. Diese Vorrichtung wurde wie folgt betrieben:

Die Vorrichtung wurde vorbeschickt, so daß für den Betrieb im Fällungsbecken III bereits 20 l Abwasser aus dem Vorfällbecken übergelaufen waren. Der Zulauf von Rohabwasser wurde auf 5 l/h eingestellt. Es erfolgte eine kontinuierliche Zudosierung von Kalkmilch 20 % auf pH 11,6, wobei gleichzeitig die entsprechende Menge TSZ (21 g) für die vorgelegten 20 l Abwasser zugegeben wurde. Die weiteren TSZ-Mengen wurden mengenproportional zugegeben. Nach 3 h war das Fällungsbecken III gefüllt. Danach wurde der Ablauf zum zweiten Sedimentationsbecken IV geöffnet. Der Sulfatgehalt im Fällungsbecken III betrug 600 mg $SO_4^{2-}$/l. Nach einer weiteren Stunde Rührdauer war er auf 450 mg $SO_4^{2-}$/l abgesunken.

Wenn der Rührer im Fällungsbecken III abgestellt wird, sedimentiert der anfallende Schlamm, und es bleibt genug Zeit, ihn abzuziehen und das gereinigte Abwasser abzutrennen, bevor das zweite Sedimentationsbecken IV gefüllt ist.

Die erhaltenen Ergebnisse sind in Tabelle 9 zusammengefaßt.

Tabelle 9

| | pH | T (°C) | Sulfatkonzentration im Ablauf (mg $SO_4^{2-}$/l) |
|---|---|---|---|
| Vorfällbecken I Vorfällung | 10,5 | 38 | 2250 |
| 1.Sedimentationsbecken 1. Sedimentation | 10,5 | 35 | 2250 |
| Fällungsbecken III TSZ-Fällung | 11,6 | 30 | 450 |
| 2. Sedimentations- bzw. Fällungsbecken IV (Wechselbehälter für TSZ-Fällung) | 11,6 | 30 | 450 |

Kontinuierlicher Betrieb:

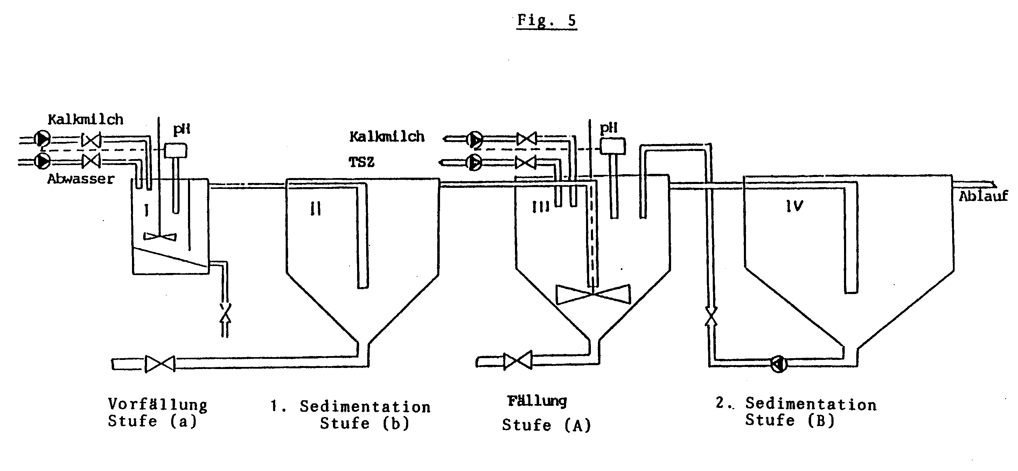

Der kontinuierliche Betrieb erfolgte analog dem Chargenbetrieb mit dem Unterschied, daß das Abwasser vom Fällungsbecken III in das zweite Sedimentationsbecken überlief und so ein Durchfluß zustandekam. Die entsprechende Vorrichtung ist in Fig. 5 dargestellt. Für die technischen Daten und die Betriebsparameter gelten die Angaben von Tabelle 8 entsprechend.

Der TSZ wurde in Stufe (A) in fester Form und suspendiert mengenproportional zugesetzt. Zur Erhöhung der Menge der Kristallisationskeime ($CaSO_4$) wurde eine Schlammrückführung vom ersten Sedimentationsbecken II zum Fällungsbecken III vorgesehen. Zur Verfahrensverkürzung wurde das Fällungsbecken III mit 20 l Abwasser aus der Vorfällung vorbeschickt. Nach 3 h begann dann der kontinuierliche Betrieb. Der Durchsatz betrug hierbei 30 l in 6 h.

Die erhaltenen Ergebnisse sind in Tabelle 10 zusammengefaßt.

Tabelle 10

| Dauer des Versuchs (h) | Sulfationenkonzentration (mg $S_4^{2-}$/l) | | | |
|---|---|---|---|---|
| | Vorfällbecken I | 1. Sedimentationsbecken II | Fällungsbecken III | 2.Sedimentationsbecken IV |
| 1 | 2250 | 2250 | 2250 | -- |
| 3 | 2250 | 2250 | 600 | -- |
| 5 | 2250 | 2250 | 450 | 450 |
| 6 | 2250 | 2250 | 400 | 400 |
| 7 | 2250 | 2250 | 400 | 400 |
| 8 | 2250 | 2250 | 400 | 400 |

Die Daten von Tabelle 10 zeigen das nach dem erfindungsgemäßen Verfahren erzielbare, außerordentlich günstige Verfahrensergebnis, da bereits mit im Stand der Technik auch nicht annähernd erreichten kurzen Verfahrenszeiten im Bereich bis maximal 5 h den gesetzlichen Vorschriften entsprechende niedrige Restsulfatkonzentrationen im Ablauf erzielt werden können.

Die gemessenen Pb-Gehalte lagen < 0,5 mg/l.

Die stöchiometrischen Berechnungen für den TSZ-Einsatz wurden wie folgt durchgeführt:

Zugrundeliegende Reaktionsgleichung:

$$CA + 3H_2SO_4 + 29H_2O + 5CaO \rightarrow C_3A \cdot C\overline{S}_3 \cdot 32H_2O \quad 158\ g/mol \quad 294\ g/mol \quad 522\ g/mol \quad 280\ g/mol \quad 1254\ g/mol$$

Zur Bildung von 1 mol Ettringit werden benötigt:

6 mol CaO $\triangleq$ 336 g/mol

1 mol $Al_2O_3$ $\triangleq$ 102 g/mol

3 mol $SO_4^{2-}$ $\triangleq$ 288 g/mol.

Legt man eine Konzentration von 1000 mg $SO_4^{2-}$/l Abwasser zugrunde, folgt:

1000 mg $SO_4^{2-}$/l $\triangleq$ 0,0104 mol $SO_4^{2-}$/l.

Daraus ergeben sich die einzusetzende $Al_2O_3$-Menge:

0,0034 mol $Al_2O_3$/l $\triangleq$ 0,354 g $Al_2O_3$/l (100 %)

und die erforderliche CaO-Menge:

0,0208 mol CaO/l $\triangleq$ 1,167 g CaO/l (100 %).

Da die Tonerdeschmelzzemente verschiedene Konzentrationen an $Al_2O_3$ und CaO aufweisen, sind diese entsprechend umzurechnen. So ergibt sich z.B. für

TSZ 1 bei 1000 mg $SO_4^{2-}$/l eine stöchiometrische Einsatzmenge von 0,9 g/l und für

TSZ 2 bei 1000 mg $SO_4^{2-}$/l eine stöchiometrische Einsatzmenge von 0,7 g/l.

Zusammengefaßt ist festzustellen, daß das erfindungsgemäße Verfahrenskonzept auf die Behandlung von Abwässern sowohl mit sehr hoher als auch mit sehr niedriger Sulfatkonzentration vorteilhaft anwendbar ist und eine außerordentlich wirtschaftliche Abwasseraufbereitung ermöglicht.

Die Wirtschaftlichkeit kann durch die Mitverwendung von $Al_2O_3$-Rotmasse noch deutlich gesteigert werden, wobei letztere zudem die Fällungsreaktion fördert und das Sedimentationsverhalten der entstehenden Calciumaluminatsulfate und ihre Filtrierbarkeit verbessert. Außerdem werden in diesem Fall keine Verunreinigungen durch die $Al_2O_3$-Rotmasse in das Fällungssystem eingebracht, und der Al-Gehalt im Ablauf wird zusätzlich gesenkt.

Anstelle von Tonerdeschmelzzementen können ferner auch andere Calciumaluminate günstig eingesetzt werden, die ggfs. speziell zum Einsatz beim erfindungsgemäßen Verfahren hergestellt sind, wodurch bei geeigneter Wahl der Ausgangsmaterialien hierfür die Gesamtkosten des Verfahrens weiter gesenkt werden können.

Der besondere Vorteil des Verfahrens gemäß der Erfindung liegt neben der apparativen Einfachheit in der außerordentlichen Verkürzung der Gesamtverfahrensdauer gegenüber herkömmlichen Verfahren auf etwa 1/3 bis 1/5.

Die Dauer der Vorfällung in den Stufen (a) und (b) beträgt nur etwa 0,5 h, wobei die Vorfällung in Stufe (a) durch gegenüber dem Stand der Technik (Kalkmilchfällung bei neutralem pH-Wert) abweichende pH-Einstellung auf 8,0 bis 11,0 optimiert werden kann.

Ein weiterer Vorteil des Verfahrenskonzepts der Erfindung besteht darin, daß die Ablaufflüssigkeit aus Stufe (B) mit Leitungswasser und/oder insbesondere mit Rohabwasser auf einen den jeweiligen gesetzlichen Vorschriften entsprechenden pH-Wert, insbesondere auf einen pH-Wert $\leq$ 9,0, eingestellt werden kann, wozu in der Praxis etwa 1/10 des Volumens an Rohabwasser erforderlich ist, wobei gleichzeitig die Sulfationenkonzentration im Ablauf $\leq$ 400 mg $SO_4^{2-}$/l gehalten werden kann.

Nach dem erfindungsgemäßen Verfahren wird gleichzeitig der Pb-Gehalt auf erheblich unter den in der Bundesrepublik Deutschland vorgeschriebenen Grenzwert von 2 mg/l abgesenkt. Gleiches gilt für den Fluorgehalt, der sich z. B. von 14000 mg $F^-$/l im eingesetzten Abwasser auf 24 mg $F^-$/l absenken läßt, also fast bis zur theoretischen Löslichkeit von 19 mg $F^-$/l.

Aus wirtschaftlicher Sicht ist es ferner von Vorteil, daß die bei der Vorfällung in Stufe (a) freiwerdende Wärmeenergie über Wärmeaustauscher zur Erwärmung des Fällungssystems in Stufe (A) herangezogen werden kann.

Schließlich ist auch günstig, daß das Verfahren nicht nur diskontinuierlich im Chargenbetrieb, insbesondere bei geringem Abwasseranfall, sondern auch kontinuierlich, besonders bei hohem Abwasseranfall, durchführbar ist.

**Patentansprüche**

1.  Verfahren zur Abtrennung von Sulfationen aus Industrieabwässern
    durch

    (A) Ausfällung von schwerlöslichen Calciumaluminatsulfaten
    durch Zusatz von reaktivem Aluminiumoxid und/oder von Calciumaluminaten zum Abwasser
    unter mechanischer Durchmischung und pH-Einstellung mit $Ca(OH)_2$ auf einen Wert im Bereich von 11,2 bis 11,8
    und

(B) Abtrennung der gebildeten Calciumaluminatsulfate,

**dadurch gekennzeichnet,** daß
in Stufe (A)

(A1) als schwerlösliches Calciumaluminatsulfat Ettringit ausgefällt wird,
(A2) das reaktive Aluminiumoxid und/oder das bzw. die Calciumaluminate gleichzeitig mit der pH-Einstellung oder danach in einer Menge, die um bis zu 20 % größer ist als die theoretisch zur Bildung von Ettringit für die jeweils vorliegende Sulfationenkonzentration des Abwassers bzw. des Ablaufwassers der Vorfällung erforderliche stöchiometrische Menge, zugesetzt werden,
(A3) der durch pH-Messung im Fällungsreaktor (III) gemessene pH-Wert des erhaltenen Fällungssystems während der gesamten Dauer der Fällungsreaktion durch separate Zudosierung von $Ca(OH)_2$ in fester Form oder in Form von Kalkmilch auf 11,2 bis 11,8 konstantgehalten wird und
(A4) die Fällungsreaktion bei einer Temperatur von 25 bis 35 °C durchgeführt wird.

2. Verfahren nach Anspruch 1, dadurch gekennzeichnet, daß

- vor der Ausfällung der schwerlöslichen Calciumaluminatsulfate in Stufe (A) folgende Verfahrensstufen einer Sulfat-Vorfällung durchgeführt werden:

  (a) Ausfällung von Calciumsulfat durch Zusatz von Calciumhydroxid bzw. Kalkhydrat zum Abwasser unter mechanischer Durchmischung und pH-Kontrolle und
  (b) Abtrennung des ausgefällten Calciumsulfats,

- wobei das in Stufe (b) erhaltene Ablaufwasser in Stufe (A) eingesetzt wird.

3. Verfahren nach Anspruch 2, dadurch gekennzeichnet, daß Stufe (a) bei einem konstantgehaltenen pH-Wert im Bereich von 8,0 bis 11,0 durchgeführt wird.

4. Verfahren nach Anspruch 2 oder 3, dadurch gekennzeichnet, daß Stufe (a) bei einem konstantgehaltenen pH-Wert im Bereich von 10,5 bis 11,0 durchgeführt wird.

5. Verfahren nach einem der Ansprüche 2 bis 4, dadurch gekennzeichnet, daß ein Teil des in Stufe (b) erhaltenen Calciumsulfats zur Einführung von Kristallisationskeimen absatzweise oder kontinuierlich in Stufe (a) rückgeführt wird.

6. Verfahren nach einem der Ansprüche 1 bis 5, dadurch gekennzeichnet, daß in Stufe (A) der pH-Wert des Systems auf 11,6 ± 0,1 eingestellt und konstantgehalten wird.

7. Verfahren nach einem der Ansprüche 1 bis 6, dadurch gekennzeichnet, daß in Stufe (A) die Calciumaluminate in fester Form in das System eingebracht werden.

8. Verfahren nach einem der Ansprüche 1 bis 6, dadurch gekennzeichnet, daß in Stufe (A) die Calciumaluminate in Form einer wäßrigen Suspension in das System eingebracht werden.

9. Verfahren nach einem der Ansprüche 1 bis 8, dadurch gekennzeichnet, daß in Stufe (A) als Calciumaluminate Tonerdeschmelzzemente eingesetzt werden.

10. Verfahren nach einem der Ansprüche 1 bis 9, dadurch gekennzeichnet, daß in Stufe (A) zur pH-Einstellung 10- bis 40- und vorzugsweise 20 masse-%ige Kalkmilch eingesetzt wird.

11. Verfahren nach einem der Ansprüche 1 bis 10, dadurch gekennzeichnet, daß Stufe (A) bei einer Temperatur von 30 °C durchgeführt wird.

12. Verfahren nach einem der Ansprüche 1 bis 11, dadurch gekennzeichnet, daß in Stufe (A) für einen Teil der Calciumaluminate Abfallaluminate eingesetzt werden.

13. Verfahren nach Anspruch 12, dadurch gekennzeichnet, daß in Stufe (A) als Abfallaluminate $Al_2O_3$-Rotmasse eingesetzt wird.

14. Verfahren nach einem der Ansprüche 1 bis 13, dadurch gekennzeichnet, daß in Stufe (A) Calciumaluminate der Zusammensetzung $CaO \cdot Al_2O_3$ bis $3CaO \cdot Al_2O_3$ eingesetzt werden.

15. Verfahren nach einem der Ansprüche 1 bis 14, dadurch gekennzeichnet, daß in Stufe (A) Calciumaluminate der Zusammensetzung $CaO \cdot Al_2O_3$ eingesetzt werden.

16. Verfahren nach einem der Ansprüche 1 bis 15, dadurch gekennzeichnet, daß Stufe (A) während einer Reaktionsdauer von 1,5 bis 5 h durchgeführt wird.

17. Verfahren nach einem der Ansprüche 1 bis 16, dadurch gekennzeichnet, daß in Stufe (A) zur Einführung von Kristallisationskeimen das bei der Vorfällung ausgefällte Calciumsulfat und/oder Calciumaluminatsulfat in Form des in Stufe (B) erhaltenen Fällungsprodukts in das System eingebracht werden.

18. Verfahren nach Anspruch 17, dadurch gekennzeichnet, daß der in Stufe (B) angefallene Niederschlag aus Calciumaluminatsulfaten in einer Menge von 50 bis 100 Masse-%, bezogen auf die Sulfatkonzentration des Systems, in Stufe (A) rückgeführt wird.

19. Verfahren nach einem der Ansprüche 1 bis 18, dadurch gekennzeichnet, daß die Ablaufflüssigkeit aus Stufe (B) mit Leitungswasser und/oder Rohabwasser auf einen pH-Wert $\leq$ 9 eingestellt wird.

20. Verfahren nach einem der Ansprüche 1 bis 19, dadurch gekennzeichnet, daß in Stufe (B) die Abtrennung der ausgefällten Calciumaluminat sulfate durch Sedimentation und/oder Abpressen vorgenommen wird,

21. Verfahren nach einem der Ansprüche 2 bis 20, dadurch gekennzeichnet, daß Stufe (a) bei einer Temperatur von 30 bis 45 °C durchgeführt wird.

22. Verfahren nach einem der Ansprüche 2 bis 21, dadurch gekennzeichnet, daß die in Stufe (a) freigesetzte Wärmeenergie über Wärmeaustauscher in Stufe (A) zur Temperierung des Fällungssystems verwendet wird.

23. Verfahren nach einem der Ansprüche 1 bis 22, dadurch gekennzeichnet, daß in Stufe (A) für die Calciumaluminatsulfat-Fällung unter Verwendung von $Al_2O_3$-Rotmasse hergestellte Calciumaluminate eingesetzt werden.

24. Verfahren nach einem der Ansprüche 1 bis 23, dadurch gekennzeichnet, daß das Gesamtverfahren diskontinuierlich durchgeführt wird.

## Claims

1. A method of separating sulphate ions from industrial waste water by

   (A) precipitating sparingly-soluble calcium aluminate sulphates by adding reactive aluminium oxide and/or calcium aluminates to the waste water, with mechanical mixing and adjustment of the pH with $Ca(OH)_2$ to a value in the range from 11.2 to 11.8
   and

   (B) separation of the calcium aluminate sulphates formed,

   characterised in that
   in step (A)

   (A1) ettringite is precipitated as sparingly-soluble calcium aluminate sulphate,

   (A2) the reactive aluminium oxide and/or the calcium aluminate or aluminates are added simultaneously with or after adjustment of the pH, in a quantity up to 20 % greater than the stoichiometric quantity theoretically necessary for forming ettringite at the respective sulphate-ion concentrations in the waste water or in the water coming from the pre-precipitation step,

   (A3) the pH of the resulting precipitation system as measured by pH-measurement in the precipitation reactor (III) is kept constant at 11.2 to 11.8 during the entire duration of the precipitation reaction by separate dosage of $Ca(OH)_2$ in solid form or in the form of milk of lime, and

(A4) the precipitation reaction is carried out at a temperature of 25 to 35 °C.

2. The method according to claim 1, characterised in that, before the sparingly-soluble calcium aluminate sulphates are precipitated in step (A), the following sulphate pre-precipitation steps are carried out:

    (a) precipitation of calcium sulphate by addition of calcium hydroxide or hydrated lime to the waste water with mechanical mixing and pH controlling, and

    (b) separation of the precipitated calcium sulphate,

the waste water obtained in step (b) being used in step (A).

3. The method according to claim 2, characterised in that step (a) is carried out at a pH kept constant in the range from 8.0 to 11.0.

4. The method according to claim 2 or 3, characterised in that step (a) is carried out at a pH kept constant in the range from 10.5 to 11.9.

5. The method according to any of claims 2 to 4, characterised in that part of the calcium sulphate obtained in step (b) is recycled batchwise or continuously to step (a) in order to introduce crystallisation seeds.

6. The method according to any of claims 1 to 5, characterised in that in step (A) the pH of the system is adjusted and kept constant at $11.6 \pm 0.1$.

7. The method according to any of claims 1 to 6, characterised in that in step (A) the calcium aluminates are introduced in solid form into the system.

8. The method according to any of claims 1 to 6, characterised in that in step (A) the calcium aluminates are introduced in the form of an aqueous suspension into the system.

9. The method according to any of claims 1 to 8, characterised in that in step (A) aluminous cements are used as calcium aluminates.

10. The method according to any of claims 1 to 9, characterised in that milk of lime of a concentration of 10 to 40 %, and preferably 20 %, by mass is used for adjusting the pH in step (A).

11. The method according to any of claims 1 to 10, characterised in that step (A) is carried out at a temperature of 30 °C.

12. The method according to any of claims 1 to 11, characterised in that part of the calcium aluminates used in step (A) are waste aluminates.

13. The method according to claim 12, characterised in that the waste aluminates used in step (A) are $Al_2O_3$ red mud.

14. The method according to any of claims 1 to 13, characterised in that calcium aluminates having the composition $CaO \cdot Al_2O_3$ to $3\, CaO \cdot Al_2O_3$ are used in step (A).

15. The method according to any of claims 1 to 14, characterised in that calcium aluminates having the composition $CaO \cdot Al_2O_3$ are used in step (A).

16. The method according to any of claims 1 to 15, characterised in that step (A) is carried out during a reaction time of 1.5 to 5 h.

17. The method according to any of claims 1 to 16, characterised in that in step (A) in order to introduce crystallisation seeds the calcium sulphate obtained during pre-precipitation and/or calcium aluminate sulphate in the form of the precipitation product obtained in step (B) are introduced into the system.

18. The method according to claim 17, characterised in that the precipitate of calcium aluminate sulphates obtained in step (B) is recycled to step (A) in a proportion of 50 to 100 % by mass, based on the sulphate concentration of the system.

19. The method according to any of claims 1 to 18, characterised in that the liquid outflow of step (B) is adjusted to a pH of 9 or below, using tapwater and/or raw waste water.

20. The method according to any of claims 1 to 19, characterised in that in step (B) the precipitated calcium aluminate sulphates are separated by sedimentation and/or by pressing.

21. The method according to any of claims 2 to 20, characterised in that step (a) is carried out at a temperature of 30 to 45 °C.

22. The method according to any of claims 2 to 21, characterised in that the heat energy envolved in step (a) is used via heat exchangers for adjusting the temperature of the precipitation system in step (A).

23. The method according to any of claims 1 to 22, characterised in that calcium aluminates produced by using $Al_2O_3$ red mud are used for the calcium aluminate sulphate precipitation in step (A).

24. The method according to any of claims 1 to 23, characterised in that the entire process is carried out batchwise.

## Revendications

1. Procédé pour la séparation des ions sulfates des eaux résiduaires industrielles par

   (A) précipitation d'aluminates-sulfates de calcium peu solubles par addition d'oxyde d'aluminium réactif et/ou d'aluminates de calcium à l'eau résiduaire
   avec brassage mécanique et réglage du pH par $Ca(OH)_2$ à une valeur dans l'intervalle de 11,2 à 11,8
   et
   (B) séparation des aluminates-sulfates de calcium formés,

   caractérisé en ce que, dans l'étape (A) :

   (A1) on précipite de l'ettringite comme aluminate-sulfate de calcium peu soluble,
   (A2) l'oxyde d'aluminium réactif et/ou le ou les aluminates de calcium sont ajoutés en même temps que le réglage du pH ou après celui-ci en excès jusqu'à 20 % par rapport à la quantité stoechiométrique théoriquement nécessaire pour la formation d'ettringite pour la concentration en ions sulfates présents à chaque fois dans l'eau résiduaire ou l'effluent de la précipitation préalable, respectivement,
   (A3) le pH du système de précipitation obtenu, mesuré par mesure du pH dans le réacteur de précipitation (III) est maintenu constant à 11,2-11,8 pendant toute la durée de la réaction de précipitation par addition dosée séparée de $Ca(OH)_2$ sous forme solide ou sous forme de lait de chaux
   et
   (A4) la réaction de précipitation est effectuée à une température de 25 à 35°C.

2. Procédé selon la revendication 1, caractérisé en ce que

   -   on effectue avant la précipitation des aluminates-sulfates de calcium peu solubles dans l'étape (A) les étapes opératoires suivantes d'une précipitation préalable :

       (a) précipitation de sulfate de calcium par addition d'hydroxyde de calcium ou d'hydrate de chaux à l'eau résiduaire avec brassage mécanique et contrôle du pH
       et
       (b) séparation du sulfate de calcium précipité,

   -   l'effluent obtenu dans l'étape (b) étant introduit dans l'étape (A).

3. Procédé selon la revendication 2, caractérisé en ce que l'étape (a) est effectuée à un pH maintenu constant dans l'intervalle de 8,0 à 11,0.

4. Procédé selon la revendication 2 ou 3, caractérisé en ce que l'étape (a) est effectuée à un pH maintenu constant dans l'intervalle de 10,5 à 11,0.

5. Procédé selon l'une des revendications 2 à 4, caractérisé en ce qu'une partie du sulfate de calcium obtenu dans l'étape (b) est recyclée par intervalles ou en continu dans l'étape (a) pour l'introduction de germes de cristallisation.

6. Procédé selon l'une des revendications 1 à 5, caractérisé en ce que le pH du système dans l'étape (A) est réglé et maintenu constant à $11,6 \pm 0,1$.

7. Procédé selon l'une des revendications 1 à 6, caractérisé en ce que les aluminates de calcium sont introduits dans le système dans l'étape (A) sous forme solide.

8. Procédé selon l'une des revendications 1 à 6, caractérisé en ce que les aluminates de calcium sont introduits dans le système dans l'étape (A) sous forme d'une suspension aqueuse.

9. Procédé selon l'une des revendications 1 à 8, caractérisé en ce que l'on utilise comme aluminates de calcium dans l'étape (A) des ciments alumineux fondus.

10. Procédé selon l'une des revendications 1 à 9, caractérisé en ce que l'on utilise pour le réglage du pH dans l'étape (A) du lait de chaux à 10-40 %, de préférence 20 % en masse.

11. Procédé selon l'une des revendications 1 à 10, caractérisé en ce que l'étape (A) est mise en oeuvre à une température de 30°C.

12. Procédé selon l'une des revendications 1 à 11, caractérisé en ce que l'on utilise des déchets d'aluminates pour une partie des aluminates de calcium dans l'étape (A).

13. Procédé selon la revendication 12, caractérisé en ce que l'on utilise dans l'étape (A) comme déchets d'aluminates une masse rouge d'$Al_2O_3$.

14. Procédé selon l'une des revendications 1 à 13, caractérisé en ce que l'on utilise dans l'étape (A) des aluminates de calcium de composition $CaO,Al_2O_3$ à $3CaO,Al_2O_3$.

15. Procédé selon l'une des revendications 1 à 14, caractérisé en ce que l'on utilise dans l'étape (A) des aluminates de calcium de composition $CaO,Al_2O_3$.

16. Procédé selon l'une des revendications 1 à 15, caractérisé en ce que l'étape (A) est mise en oeuvre pendant une durée de réaction de 1,5 à 5 heures.

17. Procédé selon l'une des revendications 1 à 16, caractérisé en ce que pour l'introduction de germes de cristallisation dans l'étape (A), on introduit dans le système le sulfate de calcium précipité dans la précipitation préalable et/ou l'aluminate-sulfate de calcium sous forme du produit de précipitation obtenu dans l'étape (B).

18. Procédé selon la revendication 17, caractérisé en ce que le précipité d'aluminates-sulfates de calcium précipité dans l'étape (B) est recyclé dans l'étape (A) en quantité de 50 à 100 % en masse, rapportée à la concentration en sulfates du système.

19. Procédé selon l'une des revendications 1 à 18, caractérisé en ce que l'effluent liquide de l'étape (B) est ajusté à un pH $\leq$ 9 par l'eau du robinet et/ou l'eau résiduaire brute.

20. Procédé selon l'une des revendications 1 à 19, caractérisé en ce que la séparation des aluminates-sulfates de calcium précipités dans l'étape (B) est effectuée par sédimentation et/ou extraction par pression.

21. Procédé selon l'une des revendications 2 à 20, caractérisé en ce que l'étape (a) est effectuée à une température de 30 à 45°C.

22. Procédé selon l'une des revendications 2 à 21, caractérisé en ce que l'énergie thermique libérée dans l'étape (a) est utilisée au moyen d'échangeurs de chaleur dans l'étape (A) pour l'équilibrage de température du système de précipitation.

**23.** Procédé selon des revendications 1 à 22, caractérisé en ce que l'on utilise pour la préparation de l'aluminate-sulfate de calcium dans l'étape (A) des aluminates de calcium fabriqués en utilisant une masse rouge d'Al$_2$O$_3$.

**24.** Procédé selon l'une des revendications 1 à 23, caractérisé en ce que le procédé total est mis en oeuvre en discontinu.

Fig. 1

EP 0 250 626 B2

Sulfatkonzentration $\left(mg/l\right)$

Vorfällung (a) mit KM
T = 35 °C

pH-Wert

Fig. 2

EP 0 250 626 B2

Sulfatkonzentration (mg/1)

Temperatur (°C)

Fig. 3

EP 0 250 626 B2

Fig. 4

Kalkmilch

pH

Kalkmilch

pH

Abwasser

TSZ

I

II

Sch

IV

III

Ablauf

Vorfällung
Stufe (a)

1. Sedimentation
Stufe (b)

Wechselweise Fällung (Stufe (A))
und 2. Sedimentation (Stufe (B))

Sch = Schieber

EP 0 250 626 B2

Fig. 5

EP 0 250 626 B2